# EUROPÄISCHE PATENTSCHRIFT

(11) **EP 0 452 539 B1**
(45) Veröffentlichungstag und Bekanntmachung des Hinweises auf die Patenterteilung: **10.08.1994**
(21) Anmeldenummer: 90119277.3
(22) Anmeldetag: 08.10.1990
(51) Int. Cl.: B29C 47/68, B29C 45/24

(54) **Filtereinrichtung für Strangpressen und Spritzgiessmaschinen**
Filtering system for extruder and injection machine
Dispositif de filtrage pour extrudeuse et presse d'injection

(30) Priorität: 19.04.1990 DE 4012404
(43) Veröffentlichungstag der Anmeldung: 23.10.1991
(73) Patentinhaber: KREYENBORG VERWALTUNGEN UND BETEILIGUNGEN KG, D-48061 Münster (DE)
(72) Erfinder: Kreyenborg, Udo, W-4400 Münster-Kinderhaus (DE)
(74) Vertreter: Habbel, Hans-Georg, Dipl.-Ing.

(56) Entgegenhaltungen:
- EP-A- 0 250 695
- EP-A- 0 314 024
- DE-A- 3 840 904

## Beschreibung

Die Erfindung bezieht sich auf eine Filtereinrichtung gemäß dem Oberbegriff des Hauptanspruches.

Der DE-38 40 904 C1 liegt die Aufgabe zugrunde, eine Anordnung für Spülkanäle so zu schaffen, daß sichergestellt wird, daß innerhalb des Siebbolzens auch im Spülkanal während des normalen Arbeitsbetriebes stets Kunststoff fließt, d. h. bewegt wird, so daß ein Verkracken von Kunststoff im Spülkanal ausgeschaltet ist. Bei der älteren Einrichtung mündet dabei der Spülkanal in der Rückspülstellung am Rande des eigentlichen Siebes, so daß keine idealen Strömungsverhältnisse vorliegen.

Der vorliegenden Erfindung liegt die Aufgabe zugrunde, die ältere Einrichtung dahingehend zu verbessern, daß ein zentrisches Rückspülen erfolgt, d. h. im Rückspülfall die Rückspülkunststoffmasse im wesentlichen zentrisch auf das im Siebbolzen befindliche Sieb auftrifft.

Diese der Erfindung zugrundeliegende Aufgabe wird dadurch gelöst, daß die verschiedenen Kanäle so angeordnet sind, daß, in der Spülstellung, der Parallelspülkanal mit dem Fließkanal an der Reinsiebseite in Verbindung steht und die Hilfskanäle dann im Gehäuse verschlossen sind.

Dies bewirkt einerseits, daß in der Rückspülstellung ein zentrisches Beaufschlagen der Schmutzseite des Siebes erfolgt, so daß eine gute strömungstechnische Führung des Kunststoffes erreicht wird und daß andererseits in der Arbeitsstellung der Hilfskanal mit in Tätigkeit tritt, d. h. auf der Reinsiebseite fließt Kunststoff einerseits sowohl in dem Fließkanal wie auch in den Hilfskanal und dann vom Hilfskanal durch den Parallelspülkanal und vom Fließkanal durch den Teilkanal.

Vorteilhafte konstruktive Ausgestaltungen sind in den Unteransprüchen erläutert.

So wird einerseits vorgeschlagen, daß Teilkanal und Parallelspülkanal zu einer Einheit zusammengefaßt werden und daß auch Fließkanal und Hilfskanal zu einer Einheit zusammengefaßt werden. Dies bringt fertigungstechnische Vorteile.

Weiterhin wird vorgeschlagen, daß die Siebbolzen Schlitze aufweisen, die mit den Abfuhrkanälen während des Spülvorgangs in Verbindung sind.

Ausführungsbeispiele der Erfindung werden nachfolgend anhand der Zeichnungen erläutert. Die Zeichnungen zeigen dabei in
- Fig. 1: schaubildlich und relativ schematisch ein Teil eines Gehäuses mit zwei Siebbolzen, wobei der eine Siebbolzen in der Arbeitsstellung und der andere Siebbolzen in der Spülstellung steht, in
- Fig. 2: in gleichem Maßstab einen der beiden Siebbolzen herausgestellt, in
- Fig. 3: in gleichem Maßstab das Gehäuse mit herausgenommenen Siebbolzen, in
- Fig. 4: eine erste abgeänderte Ausführungsform der Einrichtung gemäß Fig. 1, in
- Fig. 5: eine weitere abgeänderte Ausführungsform gemäß Fig. 1, in
- Fig. 6: in gleichem Maßstab einen der beiden Siebbolzen gemäß Fig. 5 und in
- Fig. 7: in gleichem Maßstab das Gehäuse mit herausgenommenen Siebbolzen.

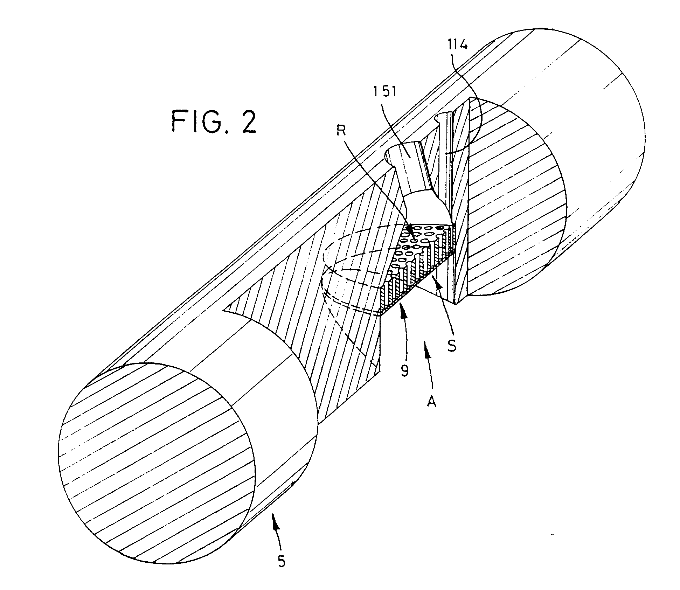

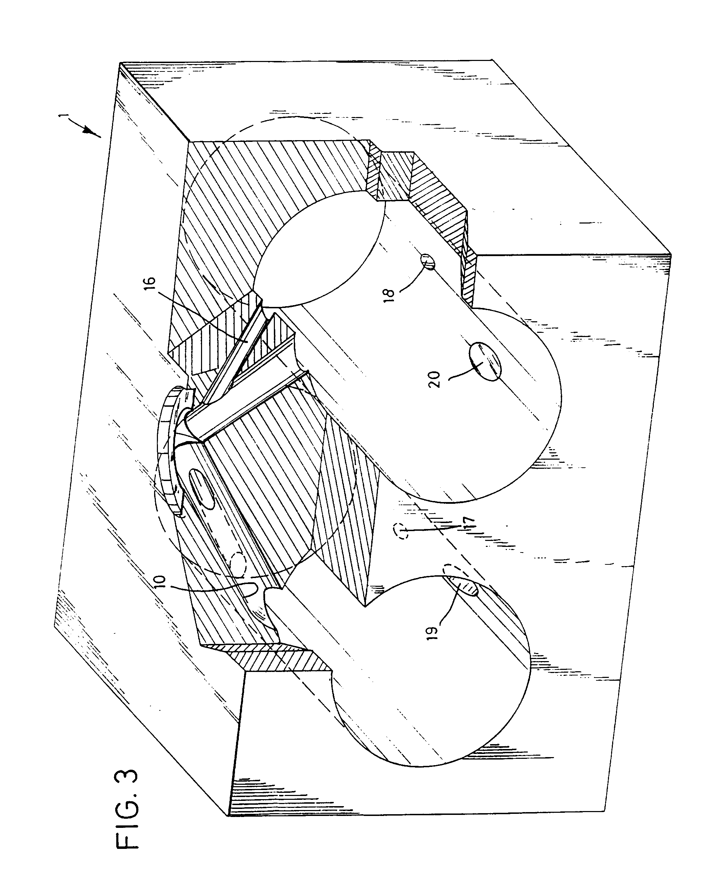

In den Zeichnungen ist ein Gehäuse 1 dargestellt, das zwei Gehäusebohrungen 2 und 3 aufweist, in denen Siebbolzen 4 und 5 in an sich bekannter Weise saugend dicht und über entsprechende hydraulische Druckvorrichtungen angetrieben verstellbar angeordnet sind. Jeder Siebbolzen weist einen Siebraum A auf (der in Fig. 2 deutlich erkennbar ist) und in jedem Siebraum A ist eine Siebstützplatte und ein Sieb angeordnet, wobei diese Gesamtheit mit 8 bzw. 9 bezeichnet ist. Zu jedem Siebraum A führen ausgehend von einem in der Zeichnung nicht dargestellten Eintrittskanal Teilkanäle, die in der Zeichnung nicht dargestellt sind, deren Mündung (19, 20) im Bereich des Siebraumes A aber in Fig. 3 erkennbar ist. Nach Durchströmen des eigentlichen Siebes 8 bzw. 9 führen dann Teilkanäle 10 bzw. 11 zu einem Austrittskanal 7.

Durch Verstellen der Siebbolzen 4, 5 können die Mündungen der zum Eintrittskanal führenden Teilkanäle 10, 11 verschlossen werden, so daß ein problemloses Auswechseln der Siebe bzw. Siebpakete nach entsprechendem Ausfahren der Siebbolzen möglich ist.

Weiterhin sind Hilfsspülkanäle 112, 114 vorgesehen, die einenendes auf der Reinsiebseite R (Fig. 2) der Siebe 8 und 9 münden und andererseits über einen Parallelspülkanal 15 bzw. 16 mit dem Austrittskanal 7 in Verbindung gebracht werden können.

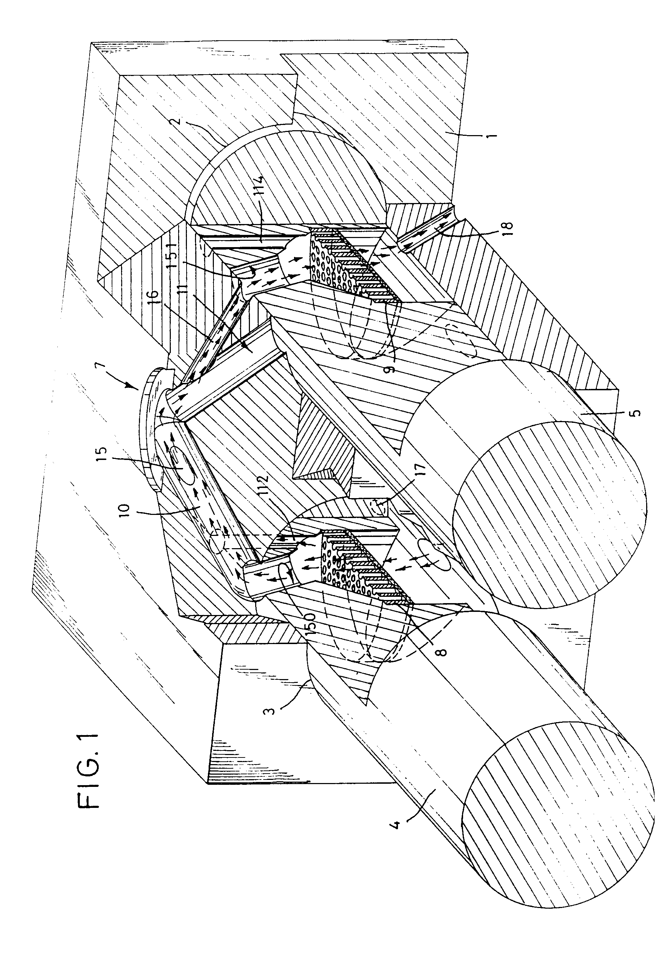

In dem Gehäuse 1 sind Abfuhrkanäle 17 und 18 ausgebildet, die gemäß Fig. 1 und 2 als Bohrungen ausgebildet sind und die in ihrer Stellung so angeordnet sind, daß beim normalen Betrieb des Siebbolzens (gemäß Fig. 1 in der Betriebsstellung des Siebbolzens 4) der Abfuhrkanal 17 verschlossen ist, daß aber in der Spülstellung, die in Fig. 1 für den Siebbolzen 5 dargestellt ist, dieser Abfuhrkanal 18 mit der Schmutzsiebseite S (Fig. 2) des Siebes 9 in Verbindung steht.

Die Arbeitsweise dieser Einrichtung ist wie folgt:
In Fig. 1 befindet sich der Siebbolzen 4 in der Arbeitsstellung und der Hilfskanal 112 mündet auf der Reinsiebseite R des in dem Siebraum A angeordneten Siebes 8. Der durch das Sieb 8 hindurchgeführte Kunststoff strömt sowohl über den Teilkanal 10 wie auch durch den Hilfskanal 112 und den Parallelspülkanal 15 zum Austrittskanal 7. Während des Betriebes des Siebbolzens 4 erfolgt also ständig eine Spülung des Hilfskanales 112 mit gesiebtem Kunststoff, der durch den Austrittskanal 7 abgeführt wird. Wird nunmehr der Siebbolzen 5 in die Spülstellung geführt, die in Fig. 1 dargestellt ist, gelangt der Fließkanal 151 mit der Mündung des Parallelspülkanales 16 auf die Reinsiebseite R des Siebes 9, durchströmt das Sieb bzw. das Siebpaket und führt an der Schmutzsiebseite S des Siebes 9 die sich dort angesammelten Schmutzpartikelchen zum Abfuhrkanal 18, von wo aus sie abgenommen werden. In dieser Stellung steht der Teilkanal 11 zwar voll Kunststoff, der nicht bewegt wird, aber da das Gehäuse kälter als der Siebbolzen 4 oder 5 gehalten wird, kann ein Verkräcken des Materials in diesem dann nicht benutzten Teilkanal 11 nicht eintreten.

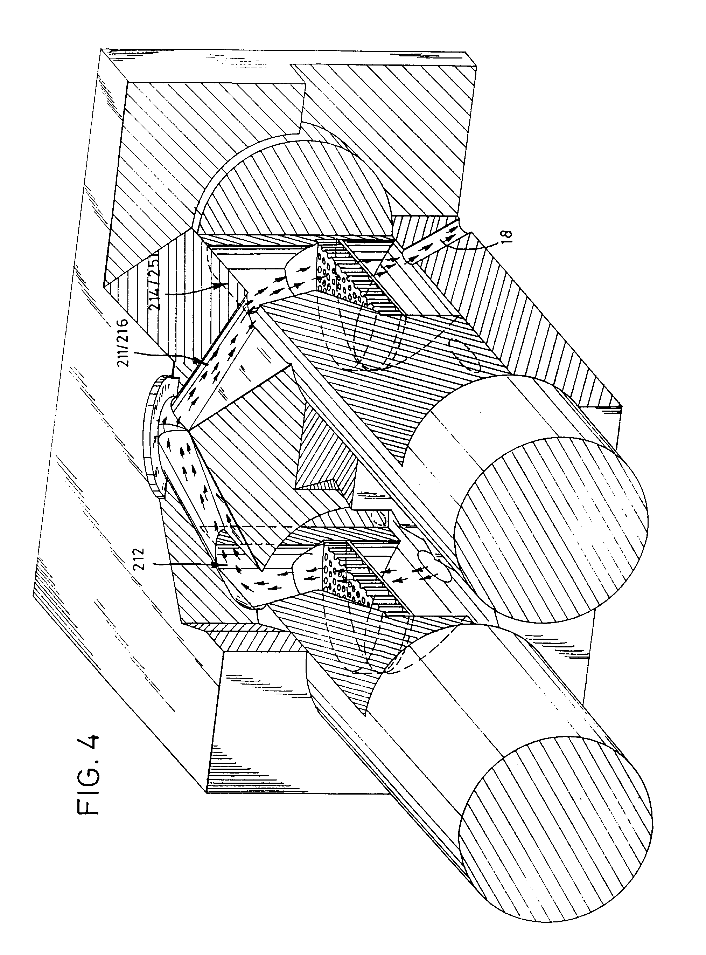

Bei der Ausführungsform gemäß Fig. 4 ist erkennbar, daß die Fließkanäle 150 und 151 mit den neben ihnen angeordneten Hilfskanälen 112 bzw. 114 zusammengefaßt sind, so daß sich Räume 214/251 bzw. 212/250 bilden.

In gleicher Weise können die Parallelspülkanäle 15 und 16 durch Entfernen des zwischen ihnen und den Teilkanälen 10 und 11 stehenden Materials zu größeren Räumen erweitert werden, so wie dies in Fig. 4 mit dem Bezugszeichen 211/216 gekennzeichnet ist.

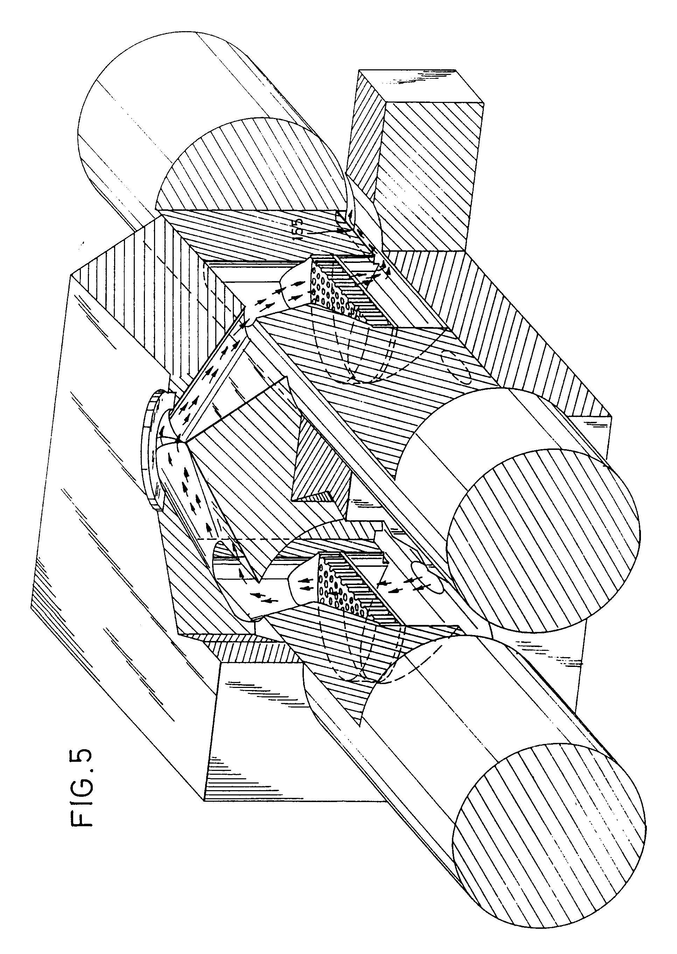

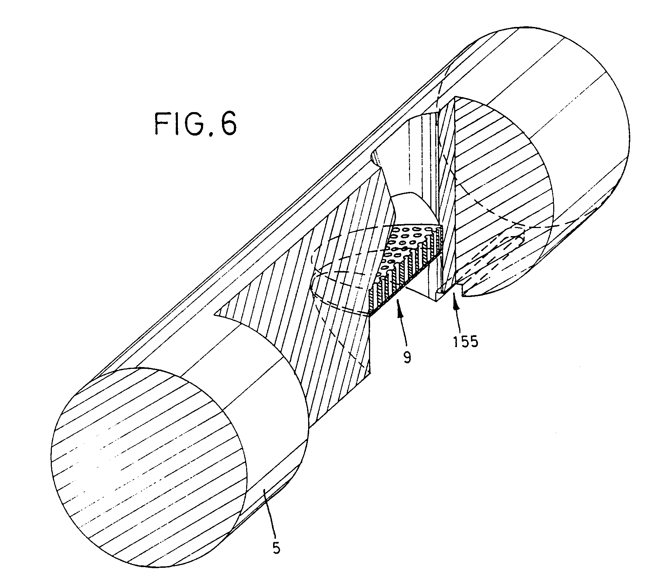

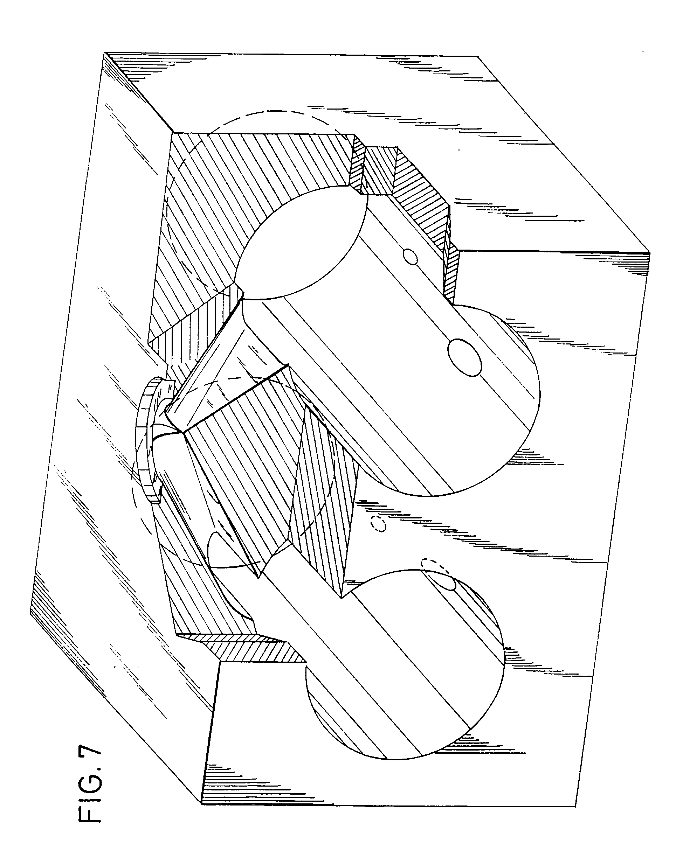

Die Fig. 5, 6 und 7 verdeutlichen, daß anstelle des in Fig. 1 bis 4 deutlich erkennbaren Abfuhrkanales 18 bzw. 17 Schlitze 155 in den Siebbolzen vorgesehen sein können.

## Patentansprüche

1. Filtereinrichtung für Strangpressen und Spritzgießmaschinen zur kontinuierlichen Verarbeitung von thermoplastischen Kunststoffen mit in jeweils mindestens zwei getrennten Teilkanälen (10, 11) zwischen dem Eintrittskanal und dem Austrittskanal (7) eines Gehäuses (1) auswechselbar in Siebbolzen (4, 5) angeordneten Siebstützplatten mit Sieben (8, 9) und Fließkanälen (150, 151), die mit in Gehäusebohrungen (2, 3) saugend dicht angeordneten Siebbolzen (4, 5) in das Gehäuse (1) ein- und ausfahrbar sind, wobei in jedem Siebbolzen (4, 5) ein Hilfskanal (112, 114) angeordnet ist, der einenendes auf der Reinsiebseite des zugeordneten Siebes (8, 9) mündet und anderenendes in die Außenfläche des Siebbolzens (4, 5) mündet, wobei auf der Austrittskanalseite des Gehäuses (1) jedem Teilkanal (10, 11) ein Parallelspülkanal (15, 16) zugeordnet ist, der während der Produktionsstellung des Siebbolzens (4 bzw. 5) einenendes mit dem Hilfskanal (112 bzw. 114) verbunden ist und anderenendes im Bereich des Austrittskanales (7) mündet und jeder Gehäusebohrung (2, 3) im Gehäuse (1) ein Abfuhrkanal (17, 18) zugeordnet ist, der in der Arbeitsstellung des Siebes (8, 9) durch den Siebbolzen (4, 5) verschlossen ist, aber in einer Spülstellung mit der Schmutzsiebseite in Verbindung bringbar ist, dadurch gekennzeichnet, daß die verschiedenen Kanäle so angeordnet sind, daß, in der Rückspülstellung des Siebbolzens (4, 5) der Parallelspülkanal (15 bzw. 16) mit dem Fließkanal (150 bzw. 151) an der Reinsiebseite in Verbindung steht und der Hilfskanal (112 bzw. 114) dann im Gehäuse (1) verschlossen ist.

2. Filtereinrichtung nach Anspruch 1, dadurch gekennzeichnet, daß jeder Teilkanal (10 bzw. 11) mit dem zugeordneten Parallelspülkanal (15 bzw. 16) einteilig ausgebildet ist (210/215; 211/216).

3. Filtereinrichtung nach Anspruch 1 oder 2, dadurch gekennzeichnet, daß jeder Hilfskanal (112, 114) mit dem zugeordneten Fließkanal (150, 151) einteilig ausgebildet ist (214/251; 212/250).

4. Filtereinrichtung nach einem oder mehreren der vorhergehenden Ansprüche, dadurch gekennzeichnet, daß die Siebbolzen (4 bzw. 5) Schlitze (155) aufweisen, die mit den Abfuhrkanälen während des Spülvorgangs in Verbindung sind.

## Claims

1. A filter apparatus for extrusion and injection moulding machines for continuous processing of thermoplastic plastics materials, comprising sieve support plates with sieves (8, 9) and flow channels (150, 151), said sieve support plates being arranged replaceably in sieve bolts (4, 5) in at least two separate partial channels (10, 11) between the inlet channel and the outlet channel (7) of a housing (1), which sieve support plates may, with sieve bolts (4, 5) arranged tightly by suction in housing bores (2, 3), be drawn in and out of the housing (1), an auxiliary channel (112, 114) being arranged in each sieve bolt (4, 5), which auxiliary channel (112, 114) opens at one end on the clean sieve side of the associated sieve (8, 9) and at the other end opens into the outside of the sieve bolt (4, 5), a parallel sluice (15, 16) being associated with each partial channel (10, 11) on the outlet channel side of the housing (1), which sluice (15, 16) is connected, when the sieve bolt (4 or 5 respectively) is in the production position, at one end with the auxiliary channel (112 or 114 respectively) and opens at the other end in the area of the outlet channel (7), and a discharge channel (17, 18) being associated with each housing bore (2, 3) in the housing (1), which discharge channel (17, 18) is closed by the sieve bolt (4, 5) when the sieve (8, 9) is in the working position but may be brought into connection with the contaminated sieve side in a rinsing position, characterized in that the various channels are so arranged that, when the sieve bolt (4, 5) is in the backwash position, the parallel sluice (15 or 16 respectively) is connected with the flow channel (150 or 151 respectively) on the clean sieve side and the auxiliary channel (112 or 114 respectively) is then closed in the housing (1).

2. A filter apparatus according to claim 1, characterized in that each partial channel (10 or 11) is constructed (210/215; 211/216) in one piece with the associated parallel sluice (15 or 16 respectively).

3. A filter apparatus according to claim 1 or claim 2, characterized in that each auxiliary channel (112, 114) is constructed (214/251; 212/250) in one piece with the associated flow channel (150, 151).

4. A filter apparatus according to any one of the preceding claims, characterized in that the sieve bolts (4 or 5) comprise slits (155) which are connected with the discharge channels during the rinsing process.

## Revendications

1. Dispositif de filtration pour presses à extruder et machines à mouler par injection pour le travail continu de matières synthétiques thermoplastiques, comprenant, dans au moins deux conduits partiels séparés (10, 11) entre le conduit d'entrée et le conduit de sortie (7) d'un corps (1), des plaques d'appui de filtres munies de filtres (8, 9) et de conduits d'écoulement (150, 151) et disposées interchangeables dans des cartouches filtrantes (4, 5) et qui peuvent être mises en place dans le corps (1) et en être extraites avec des cartouches filtrantes (4, 5) montées dans des perçages (2, 3) du corps à joint étanche à l'aspiration, cependant que, dans chaque cartouche filtrante (4, 5), est disposé un conduit auxiliaire (112, 114) qui, à une extrémité, débouche sur le côté propre du filtre (8, 9) correspondant, et, à l'autre extrémité, débouche dans la surface extérieure de la cartouche filtrante (4, 5) cependant que, sur le côté du corps (1) présentant le conduit de sortie, est prévu, associé à chaque conduit partiel (10, 11), un conduit de nettoyage parallèle (15, 16) qui, pendant la position de production de la cartouche filtrante (4 ou 5), est en communication avec le conduit auxiliaire (112 ou 114) respectivement par une extrémité tandis qu'à l'autre extrémité, il débouche dans la région du conduit de sortie (7), et qu'à chaque perçage (2, 3) du corps est associé, dans le corps (1), un conduit d'évacuation (17, 18) qui est fermé par la cartouche filtrante (4, 5) dans la position de travail du filtre (8, 9) mais qui peut être mis en communication avec la face sale du filtre dans la position de nettoyage, caractérisé en ce que les différents conduits sont disposés de manière que, dans la position de nettoyage à contre-courant de la cartouche filtrante (4, 5), le conduit de nettoyage parallèle (15 ou 16) respectivement soit en communication avec le conduit d'écoulement (150 ou 151) respectivement sur la face propre du filtre et que le conduit auxiliaire (112 ou 114) puisse alors être fermé dans le corps (1).

2. Dispositif de filfration selon la revendication 1, caractérisé en ce que chaque conduit partiel (10 ou 11) respectivement est d'un seul tenant (210/215 ; 211/216) avec le conduit de nettoyage parallèle (15 ou 16) respectivement qui lui est associé.

3. Dispositif de filtration selon la revendication 1 ou 2, caractérisé en ce que chaque conduit auxiliaire (112, 114) est réalisé d'un seul tenant (214/251 ; 212/250) avec le conduit d'écoulement (150, 151).

4. Dispositif de filtration selon une ou plusieurs des revendications précédentes, caractérisé en ce que les cartouches filtrantes (4 ou 5) respectivement présentent des fentes (155) qui sont en communication avec les conduits d'écoulement pendant l'opération de nettoyage.
